# EUROPEAN PATENT SPECIFICATION

(11) **EP 2 225 484 B1**
(45) Date of publication and mention of the grant of the patent: **15.05.2013**
(21) Application number: 08858672.2
(22) Date of filing: 05.12.2008
(51) Int. Cl.: F16K 5/06, F16K 5/08, F16K 25/00

(54) **BALL VALVE IMPEDANCE SEAT**
KUGELVENTILIMPEDANZSITZ
SIÈGE D'IMPÉDANCE DE ROBINET À BILLE

(30) Priority: 07.12.2007 US 12205
(43) Date of publication of application: 08.09.2010
(73) Proprietor: Mogas Industries Incorporated, Houston, TX 77039 (US)
(72) Inventor: CHRISTENSON, Cynthia, Spring TX 77388 (US); JACKSON, Kevin, Spring TX 77373 (US)
(74) Representative: Brewer, Michael Robert
(86) International application number: PCT/US2008/085722
(87) International publication number: WO 2009/076228

(56) References cited:
- WO-A1-97/23742
- DE-A1- 19 841 215
- JP-A- 10 281 339
- JP-A- 2006 118 664
- US-A- 4 295 493
- US-A- 5 074 522
- US-A- 5 988 586
- US-B1- 7 178 782

## Description

### Cross Reference to Related Application

This application claims the benefit of and priority to our earlier application US 61/012,205, filed December 7, 2007.

### Background of the Invention

This invention relates to a seat-mounted flow impedance element that can be used with a rotary ball valve assembly, and also to a ball valve assembly incorporating the impedance seat.

US 6,974,116 locates the impedance element in the bore of the ball valve element. Such impedance elements are provided either integrally formed as part of the ball valve element or as a separate element attached to the ball. In either case, an external surface of the ball valve element which defines the opening to the impedance element is accurately machined to cooperate in a housing of the rotary ball valve assembly in which the ball valve element is rotatably located. When the impedance assembly itself partly defines an exterior surface of the ball valve element, this part of the impedance assembly is accurately formed to fit the internal dimensions of the ball valve housing.

US 7,156,122 and US 7,278,448 avoid post-forming the exterior surface of a ball valve element by inserting the impedance element through an insertion opening formed in the ball, forming a fluid opening in the ball valve element which is non-rectilinearly aligned with the insertion opening and which communicates with the bore, and sealing the insertion opening.

US 5,482,249 discloses a ball valve with domed noise attenuators. The domed attenuators are disposed between the ball element and the housing. The domed attenuators are drilled to allow fluid to flow through single-stage openings in the attenuator. The attenuator is domed on both sides, with a concave surface spring-biased toward the ball and a convex surface away from the ball. An annular seal member is carried on the domed attenuator to seal against the ball.

WO 97/23742 discloses the use of an impedance assembly downstream of a rotary closure element. Upon varying the degree of opening of the rotary closure element, the area within the impedance assembly which is exposed to the flow correspondingly varies. The impedance assembly can be disposed in the valve housing.

### Summary of the Invention

The present invention relates to an improved impedance seat, i.e., an impedance element that can be mounted as or in conjunction with a seat in a ball valve. The impedance seat in an embodiment has a concave surface with a sphericity matching that of the ball, and a plurality of longitudinal flow paths formed through it. In one embodiment, the concave surface abuts a corresponding spherical surface of the ball to form a metal-to-metal seal. In one embodiment, the impedance seat includes an impedance assembly having a plurality of stacked plates that define tortuous flow paths and are disposed against a perforated retainer surface.

In another embodiment, the impedance seat includes a crescent-shaped full flow window wherein the convex edge of the crescent has a radius that matches the profile of a flow bore of the ball valve in a partially open, partially closed, intermediate rotation position. The impedance seat can have a central planar outlet surface in one embodiment. In an embodiment a chamfered annular surface can be provided around the central surface and have an outside diameter less than that of the peripheral seat flange.

The impedance seat can be easily fabricated to provide improved impedance characteristics. The impedance seat can be provided in an original ball valve, or can be provided as a retrofit for an existing valve. To this end, a ball valve is disclosed, comprising:
a ball mounted in a housing and having a flow bore formed therethrough, wherein the ball is rotatable between a closed position where the flow bore is transverse to a fluid flow axis and an open position where the flow bore is aligned with the fluid flow axis;
an impedance seat disposed in a flow port comprising a plurality of flow passages comprising bores opening to a concave spherical surface disposed to sealingly contact a corresponding spherical surface of the ball by rotation thereof;
wherein the impedance seat comprises an integral seat ring having an outer profile matching a seat ring retention profile of the housing;
wherein fluid communication between the flow bore of the ball and the flow passages of the impedance seat is selectively blocked by rotating the ball from a partially closed position toward the fully closed position to advance a trailing edge of the flow bore past the impedance seat bore openings, and provided by rotating the ball from a fully closed position toward the partially open position to advance a leading edge of the flow bore past the impedance seat bore openings.

The ball valve assembly may further comprise an upstream seat carrying a primary annular seal to seal against the ball in an inlet flow port when the ball is rotated to the closed position. Upon rotation of the ball from the closed position to the partially open position a leading edge of the flow bore of the ball may move past the primary annular seal to provide communication between the flow bore and the inlet flow port before communication between the flow bore and an outlet flow port via any of the plurality of flow passages in the impedance seat.

The ball valve assembly may further comprise a full flow window through the impedance seat wherein the window is disposed for communication with the flow bore of the ball when the ball is rotated from a partially open position to a fully open position. The full flow window may be crescent shaped.

A first aspect of the present invention provides an impedance seat assembly, comprising:
a housing comprising a sleeve integral with a peripheral flange adapted for seating in an outlet flow port of a ball valve;
an impedance element mounted in the housing, the housing or the impedance element comprising a concave spherical surface at an inlet end of the impedance seat assembly adapted for sealingly engaging a corresponding spherical surface of a ball in the ball valve; and
a plurality of tortuous flow passages through the impedance element having openings at the spherical surface,
wherein the impedance element comprises a plurality of stacked plates housed in the sleeve.

The tortuous flow passages may each comprise at least two right angle turns.

The stacked plates may be generally circular with a radius transverse to a flow axis.

The stacked plates may provide connected, alternating longitudinal and transverse flow elements.

The impedance seat assembly may further comprise a flow window through the impedance element. The flow window may be crescent shaped.

The concave surface may be integral with the flange and the stacked plates may be disposed on a planar surface in the sleeve opposite the concave surface.

Bores between the concave surface and planar surface may be in communication with respective flow elements in the stacked plates.

The impedance seat assembly having the stacked plates may comprise an end plate comprising the concave surface and the impedance element is retained on a platform opposite the concave surface, the sleeve being attached to the platform and housing the stacked plates.

A second aspect of the present invention provides a ball valve assembly, comprising:
a ball mounted in a housing and having a flow bore formed therethrough, wherein the ball is rotatable between a closed position where the flow bore is transverse to a fluid flow axis and an open position where the flow bore is aligned with the fluid flow axis;
the impedance seat assembly according to the first aspect of the present invention wherein the impedance seat assembly is disposed in a flow port wherein the concave spherical surface is disposed adjacent a corresponding spherical surface of the ball by rotation thereof;
wherein fluid communication between the flow bore of the ball and the flow passages of the impedance seat assembly is selectively inhibited by rotating the ball from a partially closed position toward the fully closed position to advance a trailing edge of the flow bore past openings to the impedance seat flow passages, and provided by rotating the ball from a fully closed position toward the partially open position to advance a leading edge of the flow bore past the impedance seat flow passage openings.

The impedance seat assembly may provide metal-to-metal sealing contact between the ball and the concave spherical surface of the impedance seat assembly.

The ball valve assembly according to the second aspect of the present invention may further comprise an upstream seat carrying a primary annular seal to seal against the ball in an inlet flow port when the ball is rotated to the closed position. Furthermore, upon rotation of the ball from the closed position to the partially open position a leading edge of the flow bore of the ball moves past the primary annular seal to provide communication between the flow bore and the inlet flow port before communication between the flow bore and the outlet flow port via any of the plurality of flow passages in the impedance seat assembly.

The ball valve assembly according to the second aspect may further comprise a full flow window through the impedance seat wherein the window is disposed for communication with the flow bore of the ball when the ball is rotated from a partially open position to a fully open position. The full flow window may be crescent shaped.

A third aspect of the present invention provides a method of reducing noise in a ball valve having a seat ring retention profile, comprising the step of installing the impedance seat assembly according to the first aspect of the present invention in the seat ring retention profile of the valve.

### Brief Description of the Drawings

FIG. 1 is an end view of an impedance seat according to one embodiment of the invention.
FIG. 1A is a transverse sectional view of the impedance seat of FIG. 1 as seen along the lines 1A-1A.
FIG. 2 is an enlarged perspective view of the impedance element assembly from the impedance seat of FIG. 1, according to an embodiment of the invention.
FIG. 2A is an exploded view of the impedance element assembly of FIG. 2.
FIG. 3A is a bottom sectional view of a ball valve incorporating the impedance seat of FIG. 1 according to an embodiment of the invention, shown at a position at which the valve is fully open.
FIG. 3B is a bottom sectional view of the ball valve of FIG. 3A, shown at a position at which the valve is partly open, partly closed.
FIG. 3C is a bottom sectional view of the ball valve of FIG. 3A, shown at a position at which the valve is closed.
FIG. 4A is a bottom sectional view of a ball valve incorporating an impedance seat having a crescent-shaped open flow window according to an alternate embodiment of the invention, shown at a position at which the valve is partially open to flow through the tortuous flow passages and restrict flow from the flow-through window.
FIG. 4B is a bottom sectional view of the ball valve of FIG. 4A, shown at a position at which the valve is fully open to direct flow through the window.
FIG. 4C is an end view of the ball valve of FIG. 4B showing the crescent-shaped flow window in the impedance seat.
FIG. 5 is an end view of an impedance seat having a crescent-shaped open flow window, according to an example not forming part of the invention.
FIG. 5A is a transverse sectional view of the impedance seat of FIG. 5 as seen along the lines 5A-5A.
FIG. 6 is a perspective sectional view of an impedance seat wherein an impedance assembly is proximally disposed, according to an example not forming part of the invention.
FIG. 7 is a perspective sectional view of an impedance seat wherein an impedance assembly is proximally disposed in a sleeve, according to a further alternate embodiment of the invention.

### Description of the Invention

In one embodiment, the invention relates to a ball valve comprising a ball mounted in a housing and having a flow bore formed therethrough, wherein the ball is rotatable between a closed position where the flow bore is transverse to a fluid flow axis and an open position where the flow bore is aligned with the fluid flow axis. An impedance seat disposed in a flow port comprises a plurality of flow passages comprising bores opening to a concave spherical surface disposed to sealingly contact a corresponding spherical surface of the ball by rotation thereof.

In this embodiment, fluid communication between the flow bore of the ball and the flow passages of the impedance seat can be selectively blocked by rotating the ball from a partially closed position toward the fully closed position to advance a trailing edge of the flow bore past the impedance seat bore openings; and fluid communication can be provided by rotating the ball from a fully closed position toward the partially open position to advance a leading edge of the flow bore past the impedance seat bore openings. As used herein, "leading" and "trailing" edges of the flow bore 86 refer to the sides of the flow bore 86 in advance of and behind the direction of rotation, respectively. A trailing edge during closing becomes a leading edge upon opening of the valve, and vice versa.

In an embodiment, the ball valve assembly further comprises an upstream seat carrying a primary annular seal to seal against the ball in an inlet flow port when the ball is rotated to the closed position. In an embodiment, upon rotation of the ball from the closed position to the partially open position, a leading edge of the flow bore of the ball moves past the primary annular seal to provide communication between the flow bore and the inlet flow port before communication between the flow bore and the outlet flow port via any of the plurality of flow passages in the impedance seat.

In an embodiment, the ball valve assembly can further comprise a full flow window through the impedance seat wherein the window is disposed for communication with the flow bore of the ball when the ball is rotated from a partially open position to a fully open position. In an embodiment, the full flow window is crescent shaped.

In another embodiment, the invention relates to an impedance seat assembly comprising a housing comprising a peripheral flange adapted for seating in a flow port of a ball valve, an impedance element mounted in the housing comprising a concave surface having a spherical surface adapted for sealingly engaging a corresponding spherical surface of a ball in the ball valve, and a plurality of tortuous flow passages through the impedance element having openings at the spherical surface.

In an embodiment, the tortuous flow passages each comprise at least two right angle turns. In one embodiment, the impedance element comprises a plurality of stacked plates. In another embodiment the stacked plates are generally circular with a radius transverse to a flow axis. In an embodiment, the stacked plates can provide connected, alternating longitudinal and transverse flow elements.

In another embodiment, the impedance seat assembly can further comprise a flow window through the impedance element. The flow window can be crescent shaped.

In an embodiment of the impedance seat assembly, the concave surface can be integral with the flange and the stacked plates can be disposed on a planar surface in a sleeve opposite the concave surface. The bores between the concave surface and planar surface can be in communication with respective flow elements in the stacked plates.

In another embodiment of the impedance seat assembly, the stacked plates can comprise an end plate comprising the concave surface and the impedance element can be retained on a platform opposite the concave surface. The impedance seat assembly can further comprise a sleeve attached to the platform and housing the stacked plates.

In another embodiment, the invention relates to a ball valve assembly, comprising a ball mounted in a housing and having a flow bore formed therethrough, wherein the ball is rotatable between a closed position where the flow bore is transverse to a fluid flow axis and an open position where the flow bore is aligned with the fluid flow axis. The ball valve assembly can also include the impedance seat assembly just described, wherein the impedance seat assembly is disposed in a flow port and the concave spherical surface is disposed adjacent a corresponding spherical surface of the ball by rotation thereof. Fluid communication between the flow bore of the ball and the flow passages of the impedance seat assembly can be selectively inhibited by rotating the ball from a partially closed position toward the fully closed position to advance a trailing edge of the flow bore past openings to the impedance seat flow passages; and fluid communication provided by rotating the ball from a fully closed position toward the partially open position to advance a leading edge of the flow bore past the impedance seat flow passage openings.

In an embodiment, the ball valve assembly can further comprise an upstream seat carrying a primary annular seal to seal against the ball in an inlet flow port when the ball is rotated to the closed position. The impedance seat assembly can, in an embodiment, provide metal-to-metal sealing contact between the ball and the concave spherical surface of the impedance seat assembly. In another embodiment, upon rotation of the ball from the closed position to the partially open position, a leading edge of the flow bore of the ball moves past the primary annular seal to provide communication between the flow bore and the inlet flow port, before communication between the flow bore and the outlet flow port via any of the plurality of flow passages in the impedance seat assembly.

In an embodiment, the ball valve assembly can further comprise a full flow window through the impedance seat wherein the window is disposed for communication with the flow bore of the ball when the ball is rotated from a partially open position to a fully open position. In an embodiment, the window is crescent shaped.

In another embodiment, the invention relates to a method of reducing noise in a ball valve having a seat ring retention profile, comprising the step of installing the impedance seat assembly described above in the seat ring retention profile of the valve.

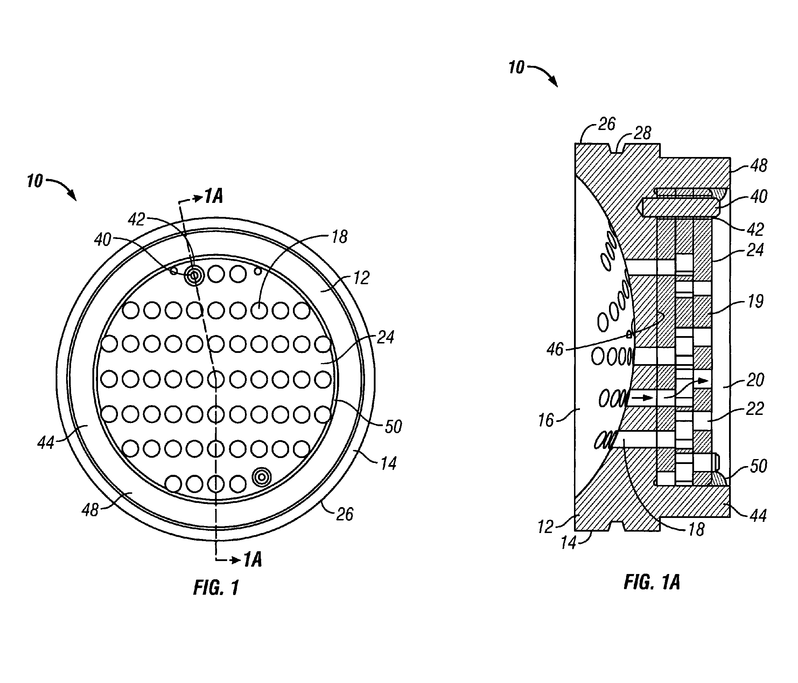

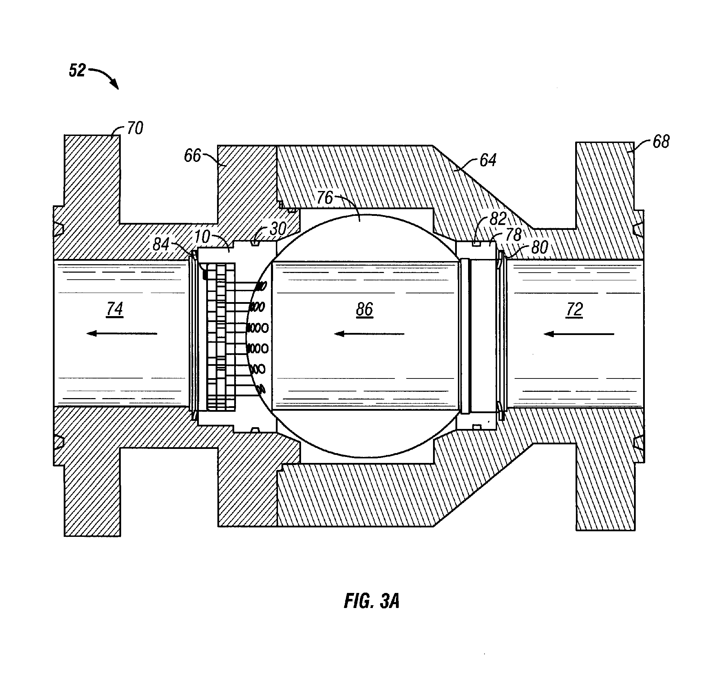

In one embodiment with reference to Figs. 1 and 1A, the present invention relates to an impedance seat 10 including a seat housing 12 having a peripheral seat flange 14 circumscribing a concave inlet surface 16 with a first plurality of flow passages 18 into chamber 20, and an impedance element 19 in the chamber 20 providing a second plurality of flow passages 22 from respective ones of the first plurality to an outlet surface 24. The seat flange 14 can have a cylindrical outer surface 26, which can, if desired, be provided with a circumferential groove 28 to receive an annular seal member 30 (see Figs. 3A - 3C).

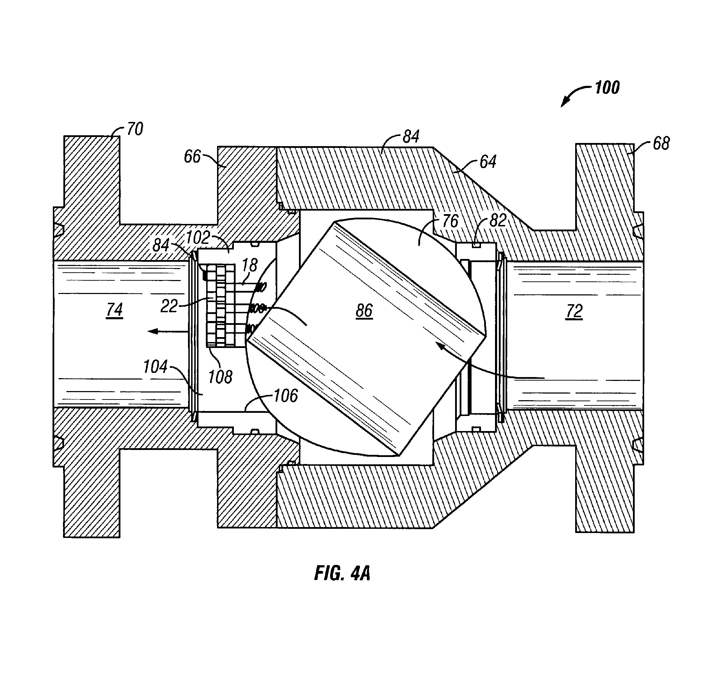

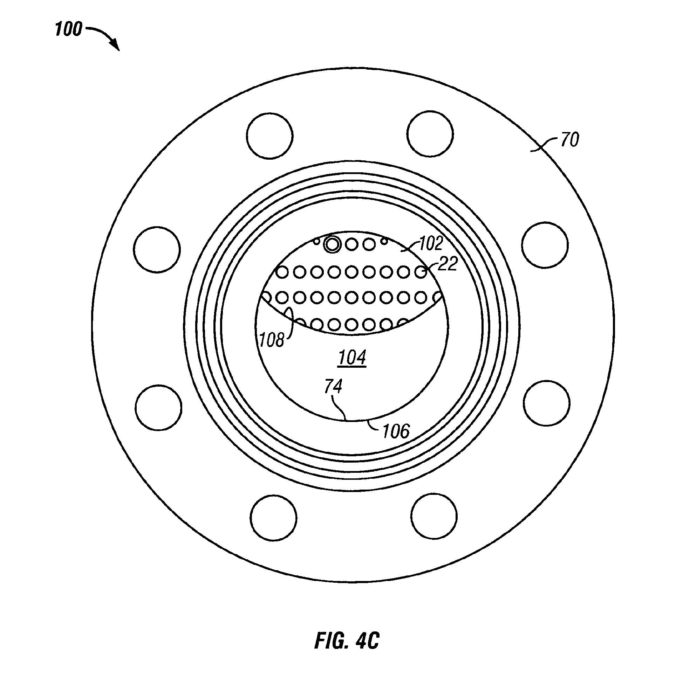

The concave surface 16 can be contiguous with the flange 14, or can be provided with a through-flow window, crescent-shaped in an embodiment, as discussed more fully in connection with Figs. 4A - 5 below. The first plurality of flow passages 18 can comprise bores that are aligned with a longitudinal flow axis and open to the surface 16. As used herein unless otherwise indicated, the terms "longitudinal," "transverse," "radial," and similar terms, are relative to the axis of fluid flow at the approach to and/or departure from the surfaces 16, 24. In this description reference is made to the impedance seat 10 being disposed in the outlet flow port of a ball valve for the purpose of clarity and convenience to illustrate a specific embodiment, not by way of limitation, and it is understood that in other embodiments the impedance seat can alternatively or additionally be located in the inlet port of the ball valve.

The surface 16 can be spherically concave and smooth in an embodiment to form a metal-to-metal seal against a correspondingly spherical surface of a ball element of a ball valve. One advantage of this embodiment is that fluid leakage can be inhibited or avoided between the flow bore in the ball and the surface 16, thereby minimizing fluid entry into the fluid passages before the bore of the ball exposes the passages 18 for communication therewith.

In an alternative embodiment, the proximal surface can support a separate annular seal element (not shown).

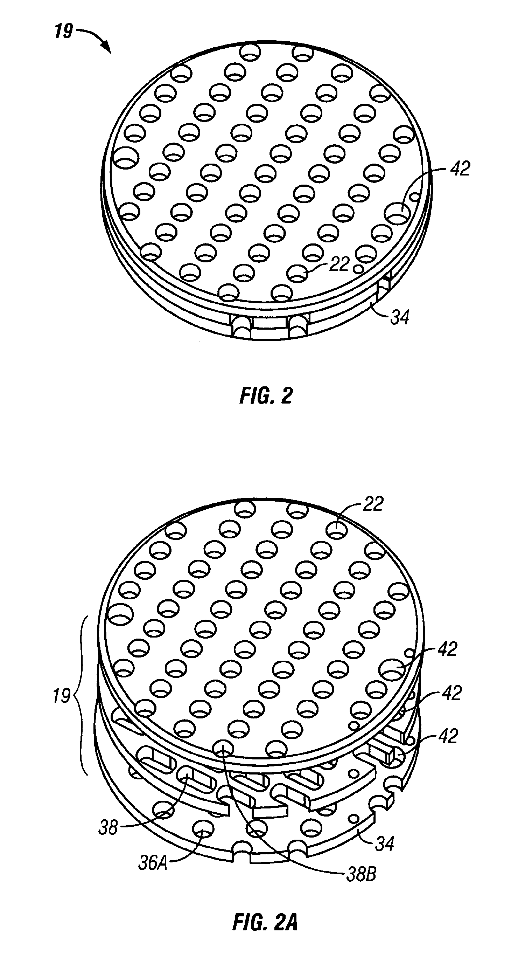

As best seen in Figs. 2 and 2A, the second plurality of flow passages 22 in impedance element 19 can provide a tortuous flow path, preferably with at least two right angle turns in each tortuous flow passage. The impedance element 19 in one embodiment can be formed from an assembly comprising a plurality of stacked circular plates 34 with a radius transverse to the flow axis. As best seen in Fig. 2A, the stacked plates 34 can provide connected, alternating longitudinal flow elements 36A, 36B and transverse flow elements 38 that define the tortuous flow passages.

Longitudinal locating pins 40 (see Figs. 1 and 1A) in corresponding coaxial bores 42 (see Figs. 2 and 2A) can be used to radially align the plates 34 with respect to each other, and/or to radially align the impedance element 19 with the first plurality of flow passages 18. If desired, temporary dowels (not shown) can alternatively or additionally be used during assembly and fabrication to align the impedance element 19 with the first plurality of flow passages 18.

As discussed below, where the concave surface is provided with a through-flow window, the impedance element can optionally be provided with a similar through-flow window, which may be aligned with the concave surface window or partially or wholly offset from the concave surface window.

Referring again to Figs. 1 and 1A, the chamber 20 housing the impedance element 19 can be defined in an embodiment by a cylindrical sleeve 44, for example, a right circular cylindrical sleeve that can extend longitudinally from a proximally located transverse planar surface 46 to a distal end 48. The sleeve 44 can have, in different embodiments, a length that is less than, greater than or about the same as the thickness of the impedance element 19. A retention member 50 such as a weld, lip, stop, clip or other transverse element, can be provided to secure the impedance element 19 in the chamber 20.

In another embodiment, a ball valve assembly 52 incorporates the impedance seat 10, as illustrated in Figs. 3A - 3C. The ball valve assembly 52 can have a body of two- or three-piece construction from metal or other suitable material, having upstream body portion 64 and downstream body portion 66. As used herein, the terms "upstream," "inlet," "high pressure" and "first" are equivalent, as are the terms "downstream," "outlet," "low pressure" and "second," and are used for reference to a flow orientation embodiment; it is to be understood that the valve is not necessarily limited to this particular flow orientation, to which reference is made herein for the purpose of illustration and convenience.

Body members 64 and 66 in an embodiment can be connected together with suitable connection means such as bolts (not shown). End connections 68 and 70 can in an embodiment allow for connection of the valve assembly 52 to respective upstream and downstream tubing, piping, or other process equipment, and can be flanged or screwed type connections as are standard in the industry. The valve assembly 52 can have a stem and stem connector (not shown), which can be adapted to connect to a valve handle or a valve positioner via an actuator mounting flange in an embodiment. The mounting flange can be bolted, for example, to the upstream body portion 64. The valve assembly 52 can in various embodiments also include stem bearings, packing rings, upper and lower anti-extrusion rings, gland follower, bolts and live loading springs (not shown).

The ball valve assembly 52 shown in Figs. 3A - 3C shows the impedance seat 10 in a valve assembly according to an embodiment. The skilled artisan will readily appreciate that the impedance seat 10 can be used or adapted for use in top entry valves, for example, or other valve bodies and assemblies known in the art.

The upstream and downstream body members 64 and 68 can have bores 72 and 74 which can form a flow path, e.g., an inlet and outlet, respectively, through valve assembly 52. When joined, body members 64 and 66 can form an interior chamber to receive ball member 76. Seat ring 78, in conjunction with gasket or O-ring 82, can form an upstream seal between an upstream outer surface of the ball member 76 and a respective inner surface of body member 64.

Similarly, the impedance seat 10, in conjunction with annular seal member 30 and spring 84, can if desired form a downstream seal between an outer surface of the ball member 76 and a respective inner surface of body member 66. Springs 80, e.g. Bellville springs, adjacent the impedance seat 10 and seat ring 78 in one embodiment can urge the impedance seat 10 and seat ring 78 against the ball member 76. Where the valve assembly 52 is of a standard design, e.g., incorporating a conventional downstream seat ring (not shown), the impedance seat 10 in an embodiment can conveniently have an outer profile matching that of the downstream seat ring it replaces.

Ball member 76 can include a stem connection detent (not shown) of a non-circular cross section to receive a distal end of the stem of matching geometry to conventionally operate the ball member 76 for rotation via the valve handle or other positioner. A flow bore 86 is provided through the ball member 76. In Fig. 3A, the ball member 76 is rotated to the full open position where the flow bore 86 is aligned with the longitudinal flow axis to permit full communication between the inlet and outlet bores 72, 74 via all of the available first and second pluralities of flow passages 18, 22 (see Figs. 1 - 2A) through the impedance seat 10. In the full open position, fluid flow is modulated by the impedance seat 10.

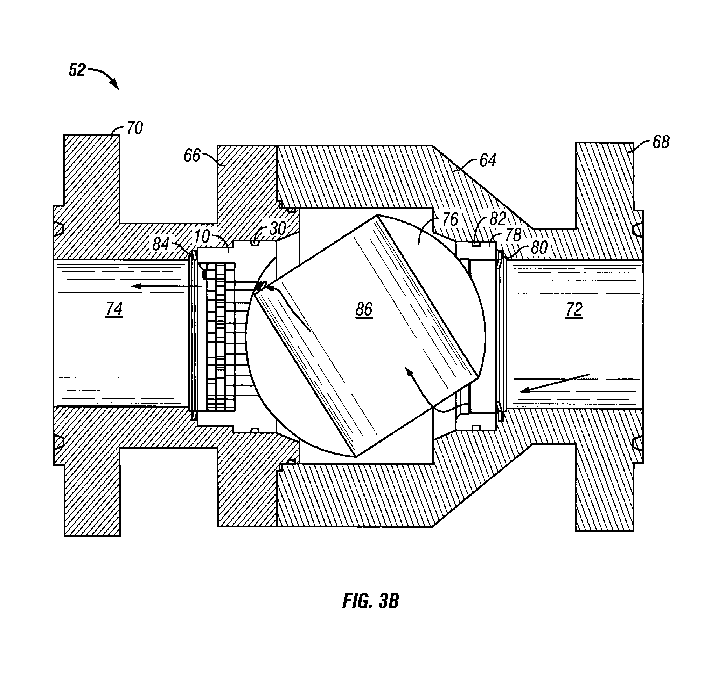

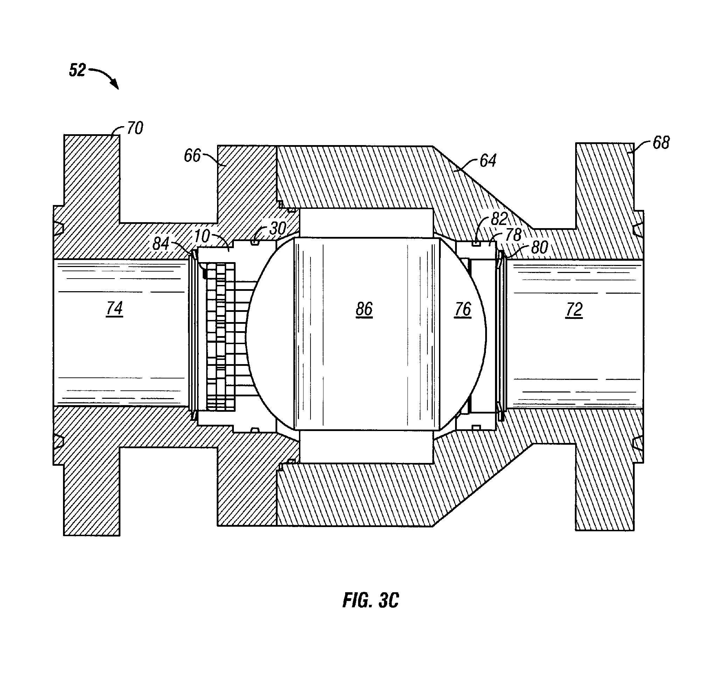

Rotating the ball member 76 from the full open position of Fig. 3A or the full closed position of Fig. 3C to the partially closed position as shown in Fig. 3B, establishes a flow control mode where fluid communication between the flow bore 86 and the outlet bore 74 is limited to a fraction of the first and second pluralities of flow passages 18, 22 (see Figs. 1 - 2A), accurately adjusting the effective size of the flow orifice through the impedance seat 10 at the exit of the flow bore 86. Further rotation of the ball member 76 more toward or away from the closed position further reduces or increases, respectively, the effective collective orifice size and eventually entirely blocks or entirely provides fluid communication to all of the first and second pluralities of flow passages 18, 22, as shown in Figs. 3C and 3A.

In an embodiment, the seat ring 78 provides a primary fluid-tight seal between the ball member 76 and the body member 64, e.g., with an annular seal member such as PTFE or other resilient material, and the impedance seat 10 a secondary seal, e.g., by metal-to-metal contact, when the valve is in the fully closed position a shown in Fig. 3C. In an embodiment, the inside diameter of the seat ring 78 is greater than a diameter of the outermost flow passages 18. Thus, when the ball member is initially rotated toward the open position (see Fig. 3B), the leading edge of the flow bore 86 passes the seat ring 78 so that there is communication with the inlet bore 72 well before the outlet leading edge of the flow bore exposes the flow bore 86 to the flow passages 18.

This embodiment may avoid severe erosion by high fluid velocity adjacent the seat ring 78 that might otherwise occur during opening or closing of the valve; and the metal-to-metal seating of the ball member 76 against the impedance seat 10 provides a secondary seal for improved control of the selective fluid communication between the flow bore 86 and the passages 18, inhibiting uncontrolled fluid leakage that might otherwise occur into the "blocked" passages 18 if a resilient sealing means were employed between the ball member 76 and the impedance seat 10.

In the embodiment sown in Figs. 4A - 4C, the valve assembly 100 is similar to the valve assembly 52 in Figs. 3A - 3C except that the impedance seat 102 is provided with a full flow window 104. The flow window 104 is crescent-shaped in a transverse plane as best seen in Fig. 3C, and is disposed so that the radius of the concave edge 106 corresponds more or less to the radius of the outlet bore 74, and the convex edge 108 corresponds more or less to the profile of the leading edge of the flow bore 86 rotated into a partially closed position of the ball member 76. When the leading edge of the flow bore 86 is further rotated toward the closed position beyond the convex edge 108 of the flow window 104, as shown in Fig. 4A, the flow window is closed and the fluid flow is modulated via the available first and second pluralities of flow passages 18, 22 through the impedance seat 102.

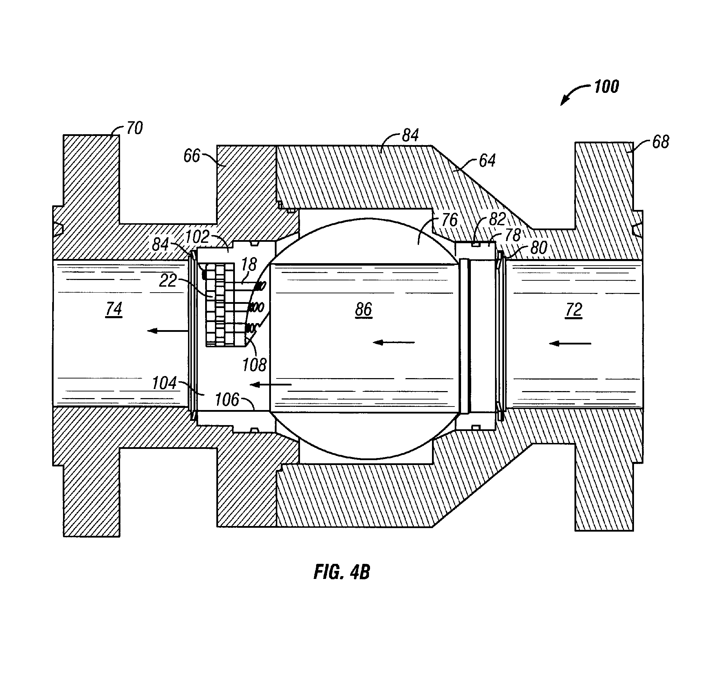

Conversely, when the leading edge of the flow bore is further rotated toward the open position as shown in Fig. 4B, fluid can flow through the impedance seat 102 via the open flow window 104 as well as the first and second pluralities of flow passages 18, 22, all of which can be available for fluid flow. Where the size of the open area of the flow window 104 is greater than the collective cross-sectional area of the first and second pluralities of flow passages 18, 22, the flow characteristics are controlled primarily by the size of the opening available through the flow window 104. That is to say, the flow characteristics when fluid flows through part of the full flow window can be primarily controlled by rotating the ball member 76 so that the leading edge of the flow bore 86 is at the desired position between the convex edge 108 and the concave edge 106.

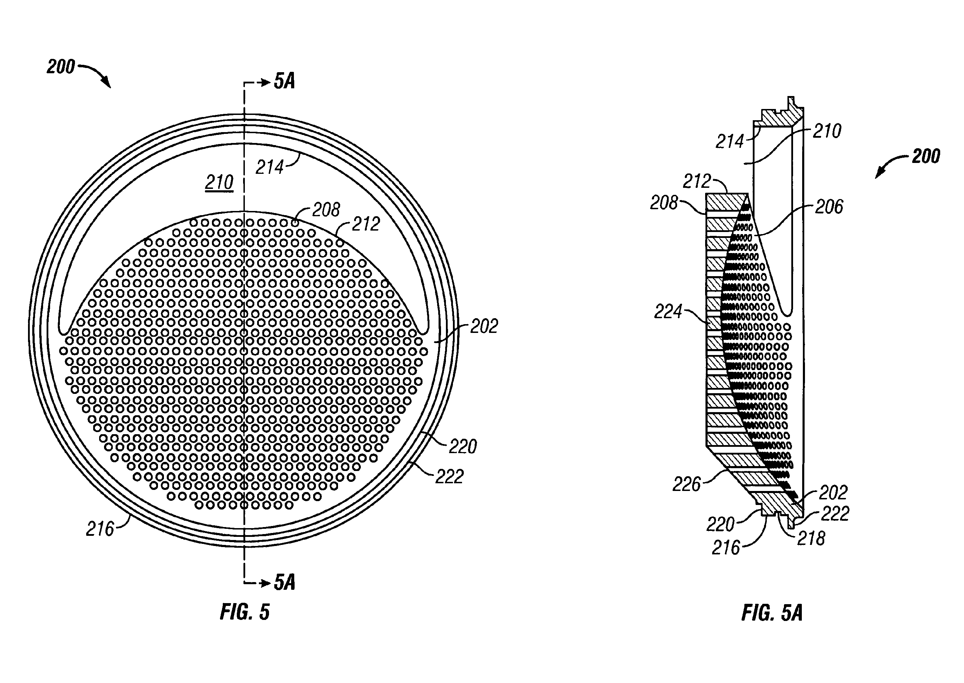

In the example illustrated in Figs. 5 and 5A, the impedance seat 200 includes an integral seat housing 202 having a peripheral seat flange 204 circumscribing a concave inlet surface 206, with a plurality of flow passages 208, and an open flow window 210, with a convex edge 212 adjacent the flow passages 208 and a concave edge 214 adjacent the flange 204. The seat flange 204 can have a cylindrical outer surface 216, which can, if desired, carry a groove 218 to receive an annular seal member (not shown). In an example, the flange 204 can be provided with an annular surface 220 to engage a spring (not shown) and/or a radial projection 222 to facilitate mounting according to the seat ring profile of a ball valve assembly (not shown) in which the impedance seat 200 is to be used.

In an example, the flow passages open to an outlet surface which includes a central planar section 224 and a peripheral chamfered section 226. This can facilitate fabrication and retro-fitting by using the chamfered section 226 at the end to help guide the seat to fit into an existing valve. In this example, an outlet or exterior spherical surface is avoided, yet dimensional strength is preserved and the quantity of material and weight of the flow passage area are reduced.

In operation, the impedance seat 200 functions in a similar manner to the impedance seat 102 described above in reference to Figs. 3A - 3C, except that without the second plurality of tortuous flow passages 22, solely the plurality of flow passages 208 are used for single-stage flow impedance when the leading edge of the flow bore through the ball member is rotated to positions between the convex edge 212 of the flow window and the full closed position.

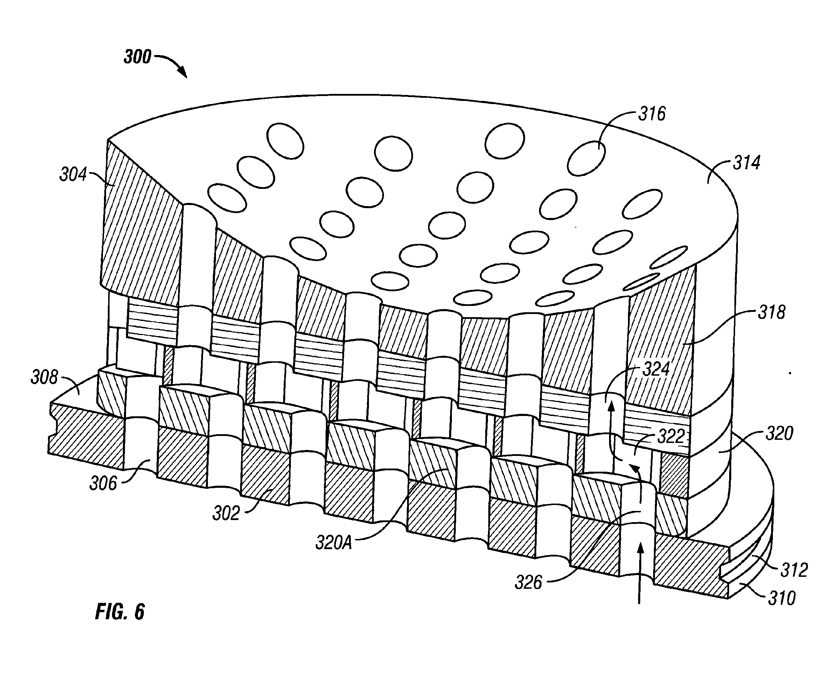

In one example with reference to Fig. 6, the present disclosure provides an impedance seat 300 including a seat platform 302 and an impedance assembly 304. The seat platform 302 has a first plurality of flow passages 306 formed through a central region thereof, and a peripheral seat flange 308. The first plurality of flow passages 306 can comprise bores that are aligned with a longitudinal flow axis.

The seat flange 308 can have a cylindrical outer surface 310, which can, if desired, carry a groove 312 to receive an annular seal member (not shown). The impedance assembly 304 has a concave inlet surface 314 which can have a radius or sphericity for cooperation and/or sealing with a ball member (not shown) in a valve. A second plurality of flow passages 316 are formed through the impedance assembly 304 in fluid communication with respective ones of the first plurality of flow passages 306, and can optionally provide a tortuous flow path, in one example, with at least two right angle turns in each tortuous flow path.

The impedance assembly 304 is in one example made from a plurality of stacked plates, which can include a concave inlet plate 318 and one or more tortuous flow plates 320. In one example, the impedance assembly 304 can be formed from a plurality of the stacked circular plates 320 with a radius transverse to the flow axis. The endmost plate 320A opposite the concave plate 318 can have a surface that matches an opposing surface of the seat platform 302, for example, the opposing surfaces of the plate 320A and the platform 302 can be flat or planar. The stacked plates 320 can provide transverse flow elements 322 connected to and alternated with longitudinal flow elements 324, 326 that define the tortuous flow passages.

Longitudinal locating pins in corresponding coaxial bores (not shown) can be used to radially align the plates 318, 320 with respect to each other, and/or to radially align the impedance assembly 304 with the first plurality of flow passages 306. If desired, temporary dowels (not shown) can alternatively or additionally be used during assembly and fabrication to align the impedance assembly 304 with the first plurality of flow passages 306. If desired the impedance seat 300 can be fabricated by welding, gluing or otherwise attaching the impedance assembly 304 and/or the individual plates 318, 320 in the appropriate order to the platform 302; or alternatively, where the valve assembly has the appropriate seat ring profile, e.g., the valve body has a flow bore with an inside diameter matching the outside diameter of the plates 318, 320, the plates can be positioned against the ball member of the valve and secured by placing the platform 302 in the seat ring detent of the valve body.

Similar to the discussion above, where the platform 302 is provided with a through-flow window (not shown), the impedance assembly 304 can optionally be provided with a similar through-flow window, which may be aligned with the inlet area window or partially or wholly offset from the inlet area window.

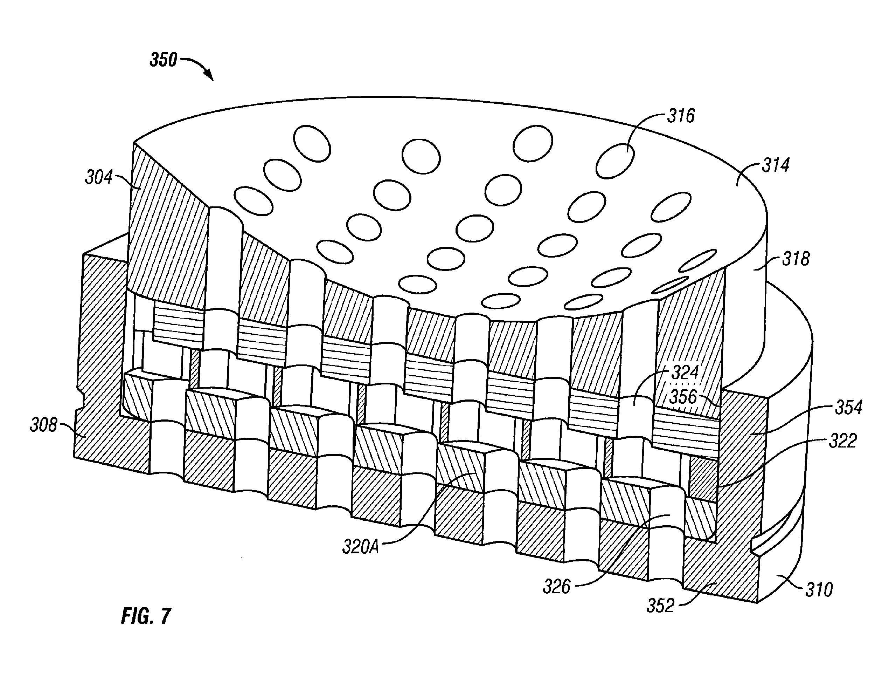

With reference to the embodiment shown in Fig. 7, the impedance seat 350 is similar to the impedance seat 300 of Fig. 6, and like numerals are used to indicate like parts. The impedance seat 350 differs from impedance seat 300 in that the seat platform 352 has a posterior sleeve 354 which cooperates with the posterior surface of the platform 352 to define a mounting chamber 356 to house the impedance assembly 304. Preferably, the sleeve 354 has a longitudinal dimension to extend to adjacent the outside diameter of the concave plate 318.

The invention is described above in reference to various embodiments by way of illustration and not by limitation. Various changes and modifications will occur to those skilled in the art in view of the foregoing disclosure. All such variations within the scope of the appended claims are to be embraced thereby.

## Claims

1. An impedance seat assembly, comprising:
a housing (12) comprising a sleeve (44) integral with a peripheral flange (14) adapted for seating in an outlet flow port of a ball valve;
an impedance element (19) mounted in the housing (12), the housing (12) or the impedance element (19) comprising a concave spherical surface (16) at an inlet end of the impedance seat assembly adapted for sealingly engaging a corresponding spherical surface of a ball in the ball valve; and
a plurality of tortuous flow passages (18, 22) through the impedance element (19) having openings at the spherical surface (16);
**characterised in that** the impedance element (19) comprises a plurality of stacked plates (34) housed in the sleeve (44).

2. The impedance seat assembly of claim 1, wherein the tortuous flow passages each comprise at least two right angle turns.

3. The impedance seat assembly of claim 1, wherein the stacked plates are generally circular with a radius transverse to a flow axis.

4. The impedance seat assembly of claim 1, wherein the stacked plates provide connected, alternating longitudinal and transverse flow elements.

5. The impedance seat assembly of claim 1, further comprising a crescent shaped full flow window through the impedance element.

6. The impedance seat assembly of claim 1, wherein the concave surface is integral with the flange and the stacked plates are disposed on a planar surface in the sleeve opposite the concave surface.

7. The impedance seat assembly of claim 6, wherein bores between the concave surface and planar surface are in communication with respective flow elements in the stacked plates.

8. The impedance seat assembly of claim 1, wherein the stacked plates comprise an end plate comprising the concave surface and the impedance element is retained on a platform opposite the concave surface, the sleeve being attached to the platform and housing the stacked plates.

9. A ball valve assembly, comprising:
a ball (76) mounted in a housing and having a flow bore (86) formed therethrough, wherein the ball (76) is rotatable between a closed position where the flow bore (86) is transverse to a fluid flow axis and an open position where the flow bore (86) is aligned with the fluid flow axis;
the impedance seat assembly (10) of any one of claims 1 to 8 wherein the impedance seat assembly (10) is disposed in a flow port wherein the concave spherical surface is disposed adjacent a corresponding spherical surface of the ball (76) by rotation thereof;
wherein fluid communication between the flow bore (86) of the ball (76) and the flow passages of the impedance seat assembly is selectively inhibited by rotating the ball (76) from a partially closed position toward the fully closed position to advance a trailing edge of the flow bore (86) past openings to the impedance seat flow passages, and provided by rotating the ball (76) from a fully closed position toward the partially open position to advance a leading edge of the flow bore (86) past the impedance seat flow passage openings.

10. The ball valve assembly of claim 9, wherein the impedance seat assembly provides metal-to-metal sealing contact between the ball and the concave spherical surface of the impedance seat assembly.

11. The ball valve assembly of claim 9, further comprising an upstream seat carrying a primary annular seal to seal against the ball in an inlet flow port when the ball is rotated to the closed position.

12. The ball valve assembly of claim 11, wherein when upon rotation of the ball from the closed position to the partially open position a leading edge of the flow bore of the ball moves past the primary annular seal to provide communication between the flow bore and the inlet flow port before communication between the flow bore and the outlet flow port via any of the plurality of flow passages in the impedance seat assembly.

13. A method of reducing noise in a ball valve having a seat ring retention profile, comprising the step of installing the impedance seat assembly of any one of claims 1 to 8 in the seat ring retention profile of the valve.

## Patentansprüche

1. Impedanzsitzeinheit, umfassend:
ein Gehäuse (12), umfassend eine Muffe (44), die mit einem peripheren Flansch (14) einstückig ist, ausgelegt, um in einem Auslass-Strömungs-Anschluss eines Kugelventils zu sitzen,
ein Impedanzelement (19), das im Gehäuse (12) montiert ist, wobei das Gehäuse (12) oder das Impedanzelement (19) eine konkave sphärische Fläche (16) an einem Einlassende der Impedanzsitzeinheit umfasst, die ausgelegt ist, um dichtend eine entsprechende sphärische Fläche einer Kugel im Kugelventil einzugreifen; und
eine Vielzahl von gewundenen Strömungsdurchgängen (18, 22) durch das Impedanzelement (19) mit Öffnungen an der sphärischen Fläche (16);
**dadurch gekennzeichnet, dass** das Impedanzelement (19) eine Vielzahl von gestapelten Platten (34) umfasst, die in der Muffe (44) aufgenommen sind.

2. Impedanzsitzeinheit nach Anspruch 1, wobei die gewundenen Strömungsdurchgänge jeweils mindestens zwei rechtwinklige Windungen umfassen.

3. Impedanzsitzeinheit nach Anspruch 1, wobei die gestapelten Platten im Allgemeinen ringförmig mit einem Radius quer zur Strömungsachse sind.

4. Impedanzsitzeinheit nach Anspruch 1, wobei die gestapelten Platten verbundene, alternierende Längs- und Querströmungselemente bereitstellen.

5. Impedanzsitzeinheit nach Anspruch 1, weiter umfassend ein halbmondförmiges Vollströmungsfenster durch das Impedanzelement.

6. Impedanzsitzeinheit nach Anspruch 1, wobei die konkave Fläche mit dem Flansch einstückig ist und die gestapelten Platten auf einer planaren Fläche in der Muffe, gegenüber der konkaven Fläche, angeordnet sind.

7. Impedanzsitzeinheit nach Anspruch 6, wobei Bohrungen zwischen der konkaven Fläche und der planaren Fläche mit den entsprechenden Strömungselementen in den gestapelten Platten in Kommunikation sind.

8. Impedanzsitzeinheit nach Anspruch 1, wobei die gestapelten Platten eine Endplatte umfassen, umfassend die konkave Fläche, und das Impedanzelement auf einer Plattform gegenüber der konkaven Fläche zurückgehalten ist, wobei die Muffe an die Plattform befestigt ist und die gestapelten Platten aufnimmt.

9. Kugelventileinheit, umfassend:
eine Kugel (76), die in einem Gehäuse montiert ist und eine Strömungsbohrung (86) umfasst, die dadurch gebildet ist, wobei die Kugel (76) drehbar ist zwischen einer geschlossenen Position, in der die Strömungsbohrung (86) quer zur Achse der Fluidströmung ist, und einer offenen Position, in der die Strömungsbohrung (86) mit der Achse der Fluidströmung ausgefluchtet ist;
die Impedanzsitzeinheit (10) nach einem der Ansprüche 1 bis 8, wobei die Impedanzsitzeinheit (10) in einem Strömungsanschluss angeordnet ist, wobei die konkave sphärische Fläche benachbart zu einer entsprechenden sphärischen Fläche der Kugel (76) durch die Drehung davon angeordnet ist;
wobei die fluidische Kommunikation zwischen der Strömungsbohrung (86) der Kugel (76) und den Strömungsdurchgängen der Impedanzsitzeinheit selektiv durch die Drehung der Kugel (76) aus einer teilweise geschlossenen Position in die vollständig geschlossene Position gesperrt wird, um eine hintere Kante der Strömungsbohrung (86) an Öffnungen zu den Impedanzsitz-Strömungsdurchgängen vorbei vorzurücken, und durch die Drehung der Kugel (76) aus einer vollständig geschlossenen Position in die teilweise geöffnete Position bereitgestellt wird, um eine vordere Kante der Strömungsbohrung (86) an den Öffnungen des Impedanzsitz-Strömungsdurchgangs vorbei vorzurücken.

10. Kugelventileinheit nach Anspruch 9, wobei die Impedanzsitzeinheit einen Metall-Metall-Dichtungskontakt zwischen der Kugel und der konkaven sphärischen Fläche der Impedanzsitzeinheit bereitstellt.

11. Kugelventileinheit nach Anspruch 9, weiter umfassend einen vorgelagerten Sitz, der eine primäre ringförmige Dichtung trägt, um gegen die Kugel in einem Einlassströmungsanschluss abzudichten, wenn die Kugel in die geschlossene Position gedreht wird.

12. Kugelventileinheit nach Anspruch 11 wobei, wenn sich bei der Drehung der Kugel aus der geschlossenen Position in die teilweise geöffnete Position eine vordere Kante der Strömungsbohrung der Kugel sich an der primären ringförmigen Dichtung vorbei bewegt, eine Kommunikation zwischen der Strömungsbohrung und dem Einlassströmungsanschluss vor der Kommunikation zwischen der Strömungsbohrung und dem Auslassströmungsanschluss über einen der Vielzahl von Strömungsdurchgängen in der Impedanzsitzeinheit bereitgestellt wird.

13. Verfahren zur Reduzierung des Geräuschs in einem Kugelventil mit einem Sitzring-Rückhalteprofil, umfassend den Schritt des Installierens der Impedanzsitzeinheit nach einem der Ansprüche 1 bis 8 im Sitzring-Rückhalteprofil des Ventils.

## Revendications

1. Assemblage de siège d'impédance, comprenant :
un logement (12), comprenant un manchon (44), faisant partie intégrante d'une bride périphérique (14), en vue d'un positionnement dans un orifice d'écoulement de sortie d'une soupape à bille ;
un élément d'impédance (19), monté dans le logement (12), le logement (12) ou l'élément d'impédance (19) comprenant une surface sphérique concave (16) au niveau d'une extrémité d'entrée de l'assemblage de siège d'impédance, adaptée pour s'engager de manière étanche dans une surface sphérique correspondante d'une bille dans la soupape à bille ; et
plusieurs passages d'écoulement sinueux (18, 22) traversant l'élément d'impédance (19), comportant des ouvertures au niveau de la surface sphérique (16) ;
**caractérisé en ce que** l'élément d'impédance (19) comprend plusieurs plaques empilées (34) logées dans le manchon (44).

2. Assemblage de siège d'impédance selon la revendication 1, dans lequel les passages d'écoulement sinueux comprennent chacun au moins deux virages à angle droit.

3. Assemblage de siège d'impédance selon la revendication 1, dans lequel les plaques empilées sont en général circulaires avec un rayon transversal à l'axe d'écoulement.

4. Assemblage de siège d'impédance selon la revendication 1, dans lequel les plaques empilées fournissent des éléments d'écoulement connectés longitudinaux et transversaux alternés.

5. Assemblage de siège d'impédance selon la revendication 1, comprenant en outre une fenêtre à écoulement complet en forme de croissant traversant l'élément d'impédance.

6. Assemblage de siège d'impédance selon la revendication 1, dans lequel la surface concave fait partie intégrante de la bride, les plaques empilées étant agencées sur une surface plane dans le manchon, opposée à la surface concave.

7. Assemblage de siège d'impédance selon la revendication 6, dans lequel des alésages entre la surface concave et la surface plane sont en communication avec des éléments d'écoulement respectifs dans les plaques empilées.

8. Assemblage de siège d'impédance selon la revendication 1, dans lequel les plaques empilées comprennent une plaque d'extrémité, comprenant la surface concave, l'élément d'impédance étant retenu sur une plate-forme opposée à la surface concave, le manchon étant fixé sur la plate-forme et recevant les plaques empilées.

9. Assemblage de soupape à bille, comprenant :
une bille (76) montée dans un logement et comportant un alésage d'écoulement (86) la traversant, la bille (76) pouvant tourner entre une position fermée, dans laquelle l'alésage d'écoulement (86) est transversal à l'axe d'écoulement du fluide, et une position ouverte, dans laquelle l'alésage d'écoulement (86) est aligné avec l'axe d'écoulement du fluide ;
l'assemblage de siège d'impédance (10) selon l'une quelconque des revendications 1 à 8, l'assemblage de siège d'impédance (10) étant agencé dans un orifice d'écoulement, la surface sphérique concave étant agencée près d'une surface sphérique correspondante de la bille (76), par suite de la rotation de celle-ci ;
la communication de fluide entre l'alésage d'écoulement (86) de la bille (76) et les passages d'écoulement de l'assemblage de siège d'impédance étant sélectivement empêchée par la rotation de la bille (76) d'une position en partie fermée vers la position complètement fermée, pour faire avancer un bord arrière de l'alésage d'écoulement (86) au-delà des ouvertures vers les passages d'écoulement du siège d'impédance, et étant établie par la rotation de la bille (76) d'une position complètement fermée vers la position en partie ouverte, pour faire avancer un bord avant de l'alésage d'écoulement (86) au-delà des ouvertures du passage d'écoulement du siège d'impédance.

10. Assemblage de soupape à bille selon la revendication 9, dans lequel l'assemblage de siège d'impédance établit un contact d'étanchéité métal sur métal entre la bille et la surface sphérique concave de l'assemblage de siège d'impédance.

11. Assemblage de soupape à bille selon la revendication 9, comprenant en outre un siège amont supportant un joint annulaire primaire pour établir l'étanchéité par rapport à la bille dans un orifice d'écoulement d'entrée lorsque la bille est tournée vers la position fermée.

12. Assemblage de soupape à bille selon la revendication 11, dans lequel, lors de la rotation de la bille de la position fermée vers la position en partie ouverte, un bord avant de l'alésage d'écoulement de la bille se déplace au-delà du joint annulaire primaire, pour établir une communication entre l'alésage d'écoulement et l'orifice d'écoulement d'entrée avant l'établissement d'un communication entre l'alésage d'écoulement et l'orifice d'écoulement de sortie à travers l'un quelconque des plusieurs passages d'écoulement de l'assemblage de siège d'impédance.

13. Procédé de réduction du bruit dans une soupape à bille, ayant un profil à bague de retenue du siège, comprenant l'étape d'installation de l'assemblage de siège d'impédance selon l'une quelconque des revendications 1 à 8 dans le profil à bague de retenue du siège de la soupape.
